(19) Europäisches Patentamt
European Patent Office
Office européen des brevets

(11) **EP 4 701 092 A1**

(12) **EUROPEAN PATENT APPLICATION**

(43) Date of publication:
**25.02.2026 Bulletin 2026/09**

(21) Application number: **25194621.6**

(22) Date of filing: **07.08.2025**

(51) International Patent Classification (IPC):
**H04B 7/06** *(2006.01)* **H04B 7/08** *(2006.01)*
**H04B 7/0452** *(2017.01)*

(52) Cooperative Patent Classification (CPC):
**H04B 7/0617**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **20.08.2024 GB 202412238**

(71) Applicant: **Nokia Solutions and Networks Oy
02610 Espoo (FI)**

(72) Inventors:
• **SOHRABI, Foad**
  **Morristown (US)**
• **KOTESHWAR SRINATH, Pavan**
  **Orsay (FR)**
• **DU, Jinfeng**
  **West Windsor (US)**

(74) Representative: **Nokia EPO representatives
Nokia Technologies Oy
Karakaari 7
02610 Espoo (FI)**

(54) **BEAM FORMING WITH USER FAIRNESS**

(57) A beamforming based user fairness arrangement is disclosed. In the arrangement analog beamforming is adjusted using a weighted sum of client device covariance matrices. The weighted sum of covariance matrices is used in designing an analog beamformer, which is then applied to at least one phase shifter. The phase shifters provide the phase shifted radion frequency signal to antennas that are used in transmitting the radio frequency signal to client devices.

Figure 2

## Description

## TECHNICAL FIELD

Various example embodiments generally relate to the field of user fairness in a communication network. Some example embodiments relate to providing user fairness using beam forming.

## BACKGROUND

User fairness in mobile communications is an important concept that ensures all users receive a fair share of resources and services. This may be particularly crucial in systems where resources such as bandwidth and power are limited.

Conventionally user fairness has been provided using multiple techniques. For example, Non-Orthogonal Multiple Access (NOMA) is a technique that allows multiple users to share the same frequency band by superimposing their signals at different power levels. This approach can improve user fairness by ensuring that users with weaker channel conditions (e.g., those farther from the base station) receive more power, while users with stronger channel conditions receive less power. Proper power allocation can be used for guaranteeing a minimum data transfer rate for all users.

Another conventional technique to improve user fairness is using digital beamforming or precoding for providing signals designed to increase user fairness in a communication network.

Various fairness metrics can be used to evaluate user fairness in mobile communications. For example, the max-min fairness metric aims to maximize the minimum achievable rate among users, ensuring that the user with the worst channel conditions still receives a fair share of resources.

As user fairness is desired there is always a need for improved mechanisms for providing user fairness. Particularly there is a need for mechanisms that do not significantly reduce overall performance of other users. Furthermore, this is commonly desired particularly when some of the network users have low data transfer rates for example, because of the device is located close to the cell edge or other area where the data transfer capacity is more limited than in better coverage areas.

## SUMMARY

This summary is provided to introduce a selection of concepts in a simplified form that are further described below in the detailed description. This summary is not intended to identify key features or essential features of the claimed subject matter, nor is it intended to be used to limit the scope of the claimed subject matter.

Example embodiments of the present disclosure enable to improve data privacy without affecting error correction performance of Hamming codes. This and other benefits may be achieved by the features of the independent claims. Further example embodiments are provided in the dependent claims, the description, and the drawings.

In the following disclosure a beamforming-based user fairness arrangement is disclosed. In the arrangement analog beamforming is adjusted using a weighted sum of client device covariance matrices. The weighted sum of covariance matrices is used in designing an analog beamformer, which is then applied to at least one phase shifter. The phase shifters provide the phase shifted radio frequency signal to antennas that are used in transmitting the radio frequency signal to client devices.

According to a first aspect, a network element is disclosed. The network element comprises at least one radio frequency chain, wherein the at least one radio frequency chain is coupled to a plurality of antennas, wherein the at least one radio frequency chain further comprises a plurality of phase shifters that are configured to: receive radio frequency signal, shift the phase of the received radio frequency signal, and transmit the phase-shifted radio frequency signal to an antenna. The network element further comprises at least one processor; and at least one memory storing instructions that, when executed by the at least one processor, cause the network element at least to: obtain client device covariance matrices; determine a set of weights; calculate a weighted sum of covariance matrices using the obtained client device covariance matrices and determined set of weights; and adjust the phase shifters based on the calculated weighted sum of covariance matrices.

In an embodiment of the first aspect the network element further comprises: a digital front end, which is connected to the at least one radio frequency chain using a digital-to-analog converter of the radio frequency chain.

In an embodiment of the first aspect the network element the at least one radio frequency chain further comprises: a splitter configured to split the received radio frequency signal into a plurality of split radio frequency signals, wherein the splitter is configured to feed each of the split radio frequency signals to a dedicated phase shifter and an antenna coupled with the dedicated phase shifter.

In an embodiment of the first aspect the network element determines the weights as a function of client device priority weights. In another embodiment the network element determines the weights based on a predetermined level of user fairness. In yet another embodiment of the first aspect the network element determines the weights based on key performance indicators of the network.

In an embodiment of the first aspect the network element is further configured to design an analog beamformer by using a matching algorithm to match the design to the calculated weighted sum of covariance matrices.

In an embodiment of the first aspect the network element is further configured to select the analog beamformer based on the designed analog beamformer.

In an embodiment of the first aspect the network element is further configured to change the phase shifter values according to the selected analog beamformer.

According to a second aspect, a method is disclosed. The method is preformed in a communication network, wherein a radio frequency chain further comprises a plurality of phase shifters, wherein the method comprises: obtaining client device covariance matrices; determining a set of weights; calculating a weighted sum of covariance matrices using the obtained client device covariance matrices and determined set of weights; and adjusting the phase shifters based on the calculated weighted sum of covariance matrices.

In an embodiment of the second aspect the method further comprises: converting a digital signal into a radio frequency signal.

In an embodiment of the second aspect the method further comprises: splitting a received radio frequency signal into a plurality of split radio frequency signals; and feeding each of the split radio frequency signals to a dedicated phase shifter and an antenna coupled with the dedicated phase shifter.

In an embodiment of the second aspect the method further comprises: determining weights as a function of client device priority weights.

In an embodiment of the second aspect the method further comprises: determining weights based on a predetermined level of user fairness.

In an embodiment of the second aspect the method further comprises: determining weights based on key performance indicators of the network.

In an embodiment of the second aspect the method further comprises: designing an analog beamformer by using a matching algorithm to match the design to the calculated weighted sum of covariance matrices.

In an embodiment of the second aspect the method further comprises: selecting the analog beamformer based on the designed analog beamformer.

In an embodiment of the second aspect the method further comprises: changing the phase shifter values according to the selected analog beamformer.

According to a third aspect, a computer program, a computer program product, or a (non-transitory) computer-readable medium is disclosed. The computer program, computer program product, or (non-transitory) computer-readable medium may comprise instructions, which when executed by an apparatus, cause the apparatus at least to perform the method according to the second aspect, or any example embodiment(s) thereof.

The embodiments and principles discussed in the above are beneficial particularly in increasing the availability of resources for users that are located near cell-edge or are otherwise having a weak signal. This is because in cellular networks the scale/order of the covariance matrix strength or magnitude of different users can be quite different. In particular, the values of the elements of the covariance matrix of cell-edge/weak users are much smaller than those of the strong users. Therefore, the elements of the summation of channel covariance matrices are determined mainly by the strong users' covariance matrices. Using appropriate weights with the summation will improve the performance of weak users as their parameters are taken better into account.

A further benefit of the present arrangement is that it can be implemented using network operator controllable parameters. Thus, the arrangements provide more tools for operators wishing to have a certain level of service in their network.

Example embodiments of the present disclosure can thus provide apparatuses, methods, computer programs, computer program products, or computer readable media for improving various aspects of wireless tethering. Any example embodiment may be combined with one or more other example embodiments. These and other aspects of the present disclosure will be apparent from the example embodiment(s) described below. According to some aspects, there is provided the subject matter of the independent claims. Some further aspects are defined in the dependent claims.

## DESCRIPTION OF THE DRAWINGS

The accompanying drawings, which are included to provide a further understanding of the example embodiments and constitute a part of this specification, illustrate example embodiments and, together with the description, help to explain the example embodiments. In the drawings:

FIG. 1 illustrates a block diagram according to an example embodiment of beam forming with user fairness;
FIG. 2 illustrates a block diagram according to an example embodiment of beam forming with user fairness;
FIG. 3 illustrates a block diagram according to an example embodiment of beam forming with user fairness;
FIG. 4 illustrates a flow diagram of a method according to an example embodiment of beam forming with user fairness; and
FIG. 5 illustrates a flow diagram of a method according to an example embodiment of beam forming with user fairness.

Like references are used to designate like parts in the accompanying drawings.

## DETAILED DESCRIPTION

Reference will now be made in detail to example embodiments, examples of which are illustrated in the accompanying drawings. The detailed description provided below in connection with the appended drawings is intended as a description of the present examples and is not intended to represent the only forms in which the present example may be constructed or utilized. The description sets forth the functions of the example and the sequence of steps for constructing and operating the example. However, the same or equivalent functions and sequences may be accomplished by different examples.

In the following disclosure network elements transmitting signals to a plurality of user/client devices is discussed. User devices can be ordinary mobile telephones, other personal computing devices or any user equipment. In addition to conventional mobile devices user devices can be internet of things devices that can be connected wirelessly to a network element comprising beamforming functionality. The network element may be any wireless base station or transmitting station that is configured to serve wireless devices and to provide a network access for the connected devices. On example of a network element is a base station of 5G network, also known as Next-Generation Node B, also known as gNodeB. However, the present embodiments are not limited to gNodeB and can be applied to many other arrangements that are or could be using analog beamforming either as an only mechanism for beamforming or in a hybrid arrangement together with digital beamforming.

Beamforming is a technique that enables a wireless network to direct its radio signals towards a specific direction, instead of transmitting them uniformly in all directions. Beamforming can enhance the signal quality, range, and data rate of wireless communication, as well as mitigate interference and power consumption. Beamforming can be realized by employing multiple antennas at the transmitter and/or the receiver and applying distinct weights or phases to the signals emitted or received by each antenna. By varying these parameters, the network can generate constructive interference in the intended direction and destructive interference in other directions, forming a beam of radio waves that aims at a specific device or location.

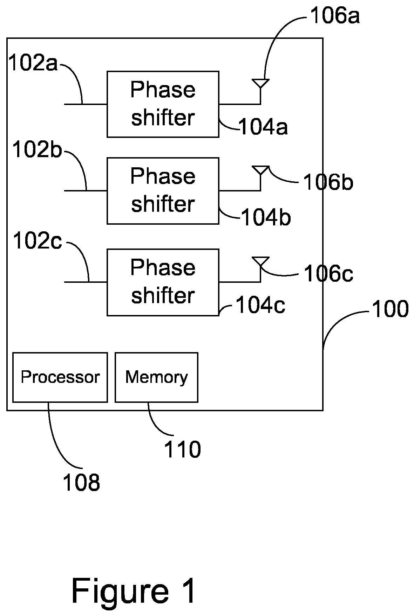

Figure 1 illustrates a block diagram according to an example embodiment. The block diagram illustrates an example of a network element 100, wherein the network element comprises a processor 108 and a memory 110. The processor is configured to execute computer programs that cause the network element to perform the functionality described in detail in the following disclosure. The memory 110 is configured to store computer program code that is executed by the processor 108. The memory 110 is further configured to store the related data that is being processed when the computer program is executed. The processor 108 and the memory 110 may be dedicated special purposes components or general purposes components shared with other functionality of a network element, such as a base station of the mobile communications network.

The network element of figure 1 comprises three phase shifters 104a - 104c. The number of phase shifters is only an example and there may be less or more than three phase shifters. Phase shifters 104a - 104c are each connected to an antenna 106a - 106c. In the example of figure 1 the phase shifters are receiving a radio frequency signal from inputs 102a - 102c. The inputs form a part of radio frequency chain that is explained in more detail in below.

As explained in the above, the phase shifters 104a - 104c receive a radio frequency signal from an earlier component in the radio frequency chain. The phase shifters are used in shifting the phase of the radio frequency signal according to instructions received from the processor 108. The phase-shifted radio frequency signal is then transmitted to one or more users via an antenna.

The network element of the example of figure 1 obtains client device covariance matrices. A covariance matrix is a mathematical tool that describes the correlation between different variables in a multivariate data set. In beamforming, a covariance matrix can be used to represent the spatial characteristics of the signals received by an array of antennas from different directions. By applying a weight vector to the covariance matrix, the array can focus its reception on a desired direction and suppress interference from other directions. The client device covariance matrices can be obtained in pilot channel training phase, during which also other preparations take place.

The network element 100 then determines weights for improving user fairness. More detailed examples of determining weights will be discussed in below. The determination of weights can be based on the network conditions. This is a network controllable parameter and can be designed by the network operators. For example, the determination of weights can be based on a function of client device priority weights, desired level of user fairness or on key performance indicators of the network. As the weights can be based on one or more parameters, a combination of parameters may be used when computing weights to be used in weighting the summation of covariance matrices.

When the covariance matrices and weights are known, the network element 100 can calculate a weighted sum of covariance matrices. The weighted sum is then used in adjusting phase shifters.

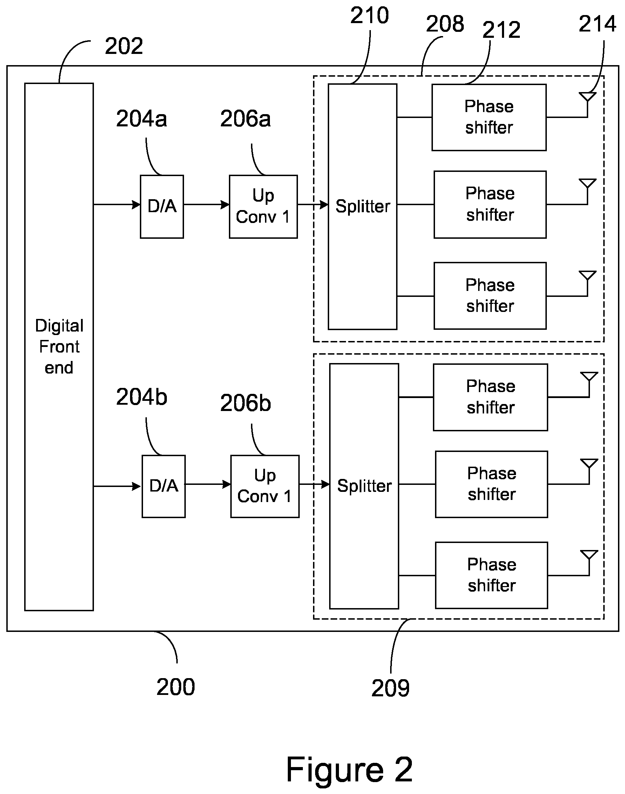

Figure 2 illustrates a block diagram according to an example embodiment. Figure 2 provides a more complete illustration of a system, wherein the example embodiment of figure 1 can be used. The example embodiment of figure 2 discloses a network element 200.

In general, there are different architectures to realize a hybrid beamformer. The two mainstream hybrid beamformer architectures are fully-connected architecture and a partially-connected architecture. In a fully-connected architecture each radio frequency chain is connected to all the antenna elements via a network of phase shifters. In a partially-connected architecture, or subarray based, architecture, each RF chain is connected only to a sub-array of antennas instead of an entire array. For example, a subarray with $M = N_{BS}/N$

antenna elements may be used.

The following examples discuss about a partially-connected hybrid beamformer, however, similar principles may be used also in fully-connected analog and hybrid beamformers.

In the network element 200 a digital front end 202 is performing digital signal processing. Among other things the digital front end 202 may perform digital beam forming. Digital beamforming designs different signals for each of the antenna in the digital baseband processing. It is possible to include user fairness measures in the digital beamforming phase. Digital beamforming is sometimes also called as precoding. The digital front end 202 may be connected to a plurality of radio frequency chains. The radio frequency chain structure may be fully-connected or partially-connected. In the partially-connected structure radio frequency chains are arranged into subarrays that together form the overall system for transmitting signals using multiple antennas.

In a hybrid beamforming arrangement both digital and analog beamforming are used. The signal precoded by the digital front end 202 is fed to radio frequency chains through digital-to-analog converters 204a - 204b. In the example of figure 2 only two radio frequency chains are shown, however, it is possible that the number of radio frequency chains is considerably higher. Each of the radio frequency chains is connected to a sub-array of antennas and in view of the present embodiment there is not upper limit for the number of the sub-arrays and it may be decided also by taking other design parameters into account.

The converted analog signal is then fed to an upconverter 206a - 206b, which is used for providing frequency conversion to a higher frequency. The upconverted signal is then fed to a subarray 208-209. In the example of Figure 2 subarrays 208 and 209 are identical. Thus, what is explained with regard subarray 208 can be applied to subarray 209.

The subarray 208 comprises a splitter 210 that receives the radio frequency signal from upconverter 206a. The splitter splits the upconverted radio frequency signal into a plurality of split signals. The number of split signals is the same as the number of phase shifters 212 and antennas 214. The split signals are fed to phase shifters 212, which are providing analog beamforming as explained in the example of figure 1 and will be explained in more detail in below. The phase shifted signal is then transmitted through antennas 214.

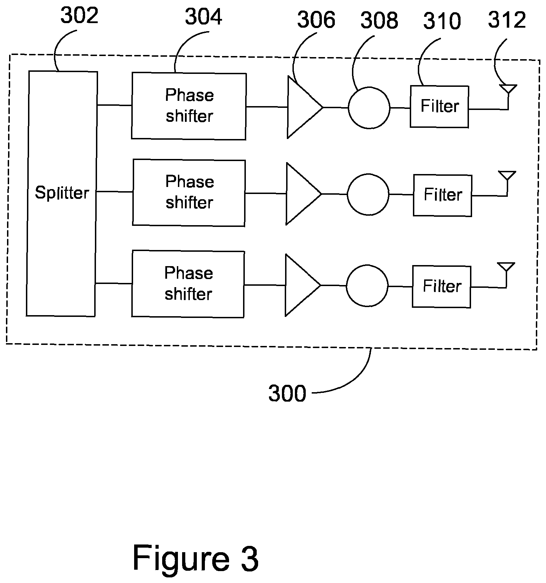

Figure 3 illustrates a block diagram according to an example embodiment. In the example of figure 3 a possible implementation of a subarray is shown. The subarray 300 comprises a splitter 302 that receives a radio frequency signal a splits the radio frequency signal into a plurality of signals. The split signals are fed to phase shifters 304. Phase shifters 304 are used to perform the analog beamforming. Each of the phase shifters has an instruction that is derived from the weighted sum of covariance matrices. The phase shifters thus form the analog beam forming part of the hybrid beamformer. However, it is possible to use the analog beamforming principles of the present disclosure also in purely analog beamformers.

In the earlier examples the structure of between the phase shifters 304 and antennas 312 has not been disclosed, however, it is common that there are additional components between the phase shifter and the antenna. For example, common components that typically do not contribute to the user fairness include an amplifier 306, a circulator 308 and a filter 310 before the signal is ready for transmission from the antenna 312.

As mentioned in the above, the discussed hybrid beamformer of the example is a partially-connected structure so that each RF chain is connected only to one sub-array with M antennas, the analog beamforming matrix in this architecture has a block diagonal format:

$$V_{RF} = \frac{1}{\sqrt{M}} \begin{bmatrix} v_1 & 0 & 0 & 0 \\ 0 & v_2 & 0 & 0 \\ 0 & 0 & ... & 0 \\ 0 & 0 & 0 & v_N \end{bmatrix}. \quad (1)$$

Furthermore, since the analog beamformer is realized by simple analog phase shifters, the elements of $v_n$'s satisfy the constant modulus constraint: $|v_n(i)| = 1$ which means that:

$$v_n = \begin{bmatrix} e^{j\theta_{n1}} \\ e^{j\theta_{n2}} \\ ... \\ e^{j\theta_{nM}} \end{bmatrix}, \quad (2)$$

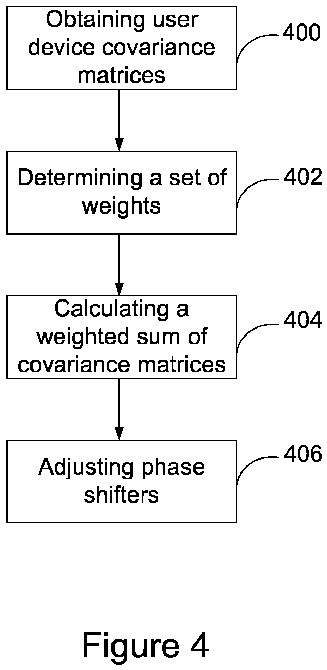

Figure 4 illustrates a flow diagram of a method according to an example embodiment. In the example first user device covariance matrices are obtained, step 400. Obtaining matrices are explained in the following, however, also other known approaches may be used.

In the following channel matrix between the base station and user k is denoted by $H_k \in C^{N_{UE} \times N_{BS}}$. Since the analog precoder is typically a post-inverse fast Fourier transforms (IFFT) module, or equivalently analog combiner is a pre-FFT module, the analog precoder is identical/common for all subcarriers/subbands. Given this fact and further to optimize the CSI acquisition overhead, it is desirable to design the analog precoder based on long-term statistics of the channel.

In the following it is assumed that the base station has has access to information to the covariance matrix for each UE: $Q_k = E[H_k H_k^H]$. The base station can acquire channel state information including an estimate of the covariance matrices during uplink or downlink pilot training phase. The estimate is denoted by $\{Q_k\}_{\forall k}$.

After obtaining covariance matrices a set of weights is determined, step 402. In the following weights are nominated by $\beta_k$. The weights are network controllable parameters by which the operators can impose fairness between the users. For example, the weights $\beta'_k s$ can be set as a function of the UE priority weights of users and the strengths of the covariance matrix: $\beta_k = f(\alpha_k; Q_k)$ where $f(.,.)$ is any predefined mapping function, and $\alpha_k$ is the UE priority weights. For example, $\alpha_k$ can be the inverse of the long-term average rate of user $k$. One example of $f(.,.)$ that can be used in the simulations is $\beta_k =$

$$f(\alpha_k; Q_k) = \frac{\alpha_k}{\|Q_k\|}$$

. Other choices such as $\frac{\alpha_k^2}{\|Q_k\|}, \frac{g(\alpha_k)}{\|Q_k\|}$ ,..., where $g(.)$ is another predetermined mapping function, can also be used. Another well performing examples include $\beta_k = $

$$f(a_k; Q_k) = \frac{a_k}{|Q_k|_2}$$

and $\frac{1}{|Q_k|_2}$ , where $|Q_k|_2$ denotes the norm Forbenius of $Q_k$.

The user fairness typically means that giving more resources to one user means reducing resources from others. Thus, giving additional resources to weak users can be done at the cost of other users. The accepted level of the cost can be decided by the network operator by considering the cost and benefits received from the arrangement. Thus, the choice of $g(.)$ can depend on the desired level of user-fairness and desired KPI. For example, $g(a_k) = a_k^2$ as compared to $g(a_k) = \alpha_k$ can lead to a better performance for cell edge users at a cost of performance degradation of stronger users.

After the weights have been set it is possible to calculate a weighted sum of covariance matrices, step 404:

$$Q^{weighted} = \sum_k \beta_k . E[H_k H_k^H] = \sum_k \beta_k . Q_k$$

After $Q^{weighted}$ has been calculated, it is possible to adjust the phase shifters based on the $Q^{weighted}$. This is typically done so that an analog beamformer is designed using known principles that have been conventionally used in designing the analog beamformer based on the summation of channel covariance matrices. For example, it is possible to use a covariance matching with the trace metric:

$$\max_{V_{RF} \in \mathfrak{F}} trace \left( V_{RF}^H Q^{weighted} V_{RF} \right)$$

In the above $\mathfrak{F}$ denotes the feasibility set considering all constraints that the analog beamformer should satisfy, i.e., the architectural constraints and the constant modulus constraints.

After designing the analog beamformer the phase shifters are set so that they implement the designed beamformer, step 406. As an outcome the actual signals transmitted from the antennas is different and provides more resources for the weak users.

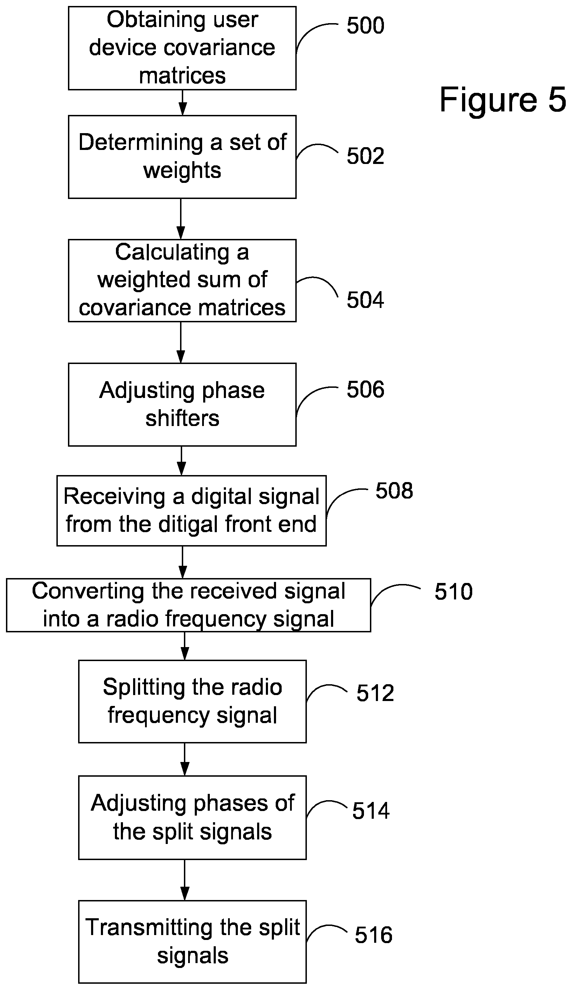

In figure 5 a flow chart of another method is illustrated. The method of the example is performed in a network element, such as a base station. The method includes obtaining user covariance matrices, step 500. With this regard the method is not necessarily in sequential order, but the user covariance matrices are typically obtained during uplink or downlink pilot channel training phase. Accordingly, weights for the matrices, step 502, may be calculated anytime when the necessary parameters are known. When both matrices and weights have been acquired, it is possible to calculate weighted sum of covariance matrices, step 504. Based on the calculated weighted sum of covariance matrices, it is possible to adjust the phase shifters of the analog beamformer, step 506, so that user fairness is increased while maintaining the cost for other users at acceptable level.

As mentioned in the above, the example of figure 5 does not necessarily be executed in a sequential order. Particularly this applies so that steps 500 - 506 are performed once for a plurality of rounds of steps 508 - 516. When the phase shifters have been adjusted, they are commonly used for beamforming as long as the conditions allow or it is otherwise decided.

In the example a digital front end of a base station produces a digital signal that is received at radio frequency chain, step 508. The received digital signal may be precoded so that it is digitally beamformed. Digital beamforming may also include measures for user fairness; however, it may not provide sufficient design flexibility. In addition to user fairness the digital beamform produces signals that take other requirements of beam forming into account. In addition to precoding or digital beam forming, the received digital signal may also be otherwise processed. Furthermore, the base station or other network element, wherein the present embodiments are implemented, may have additional components that have been participating in generating, processing or otherwise altering a digital signal that is received by the radio frequency chain.

The received possibly precoded digital signal is then converted into an analog signal, step 510. The analog signal is converted into an appropriate frequency. The radio frequency signal is then fed into a splitter that is configured to split the received radio frequency signal into a plurality of split signals, step 512. Each of the subarrays in a network element typically has a splitter that is receiving the radio frequency signal for the subarray.

The split signals are then adjusted using phase shifters, step 514. The split signals are adjusted based on the weighted sum of covariance matrices and thus, the user fairness is improved by the analog beamforming performed using the phase shifters. The phase shifted split signals are then transmitted to a receiver, step 516, through one or more antennas.

Any range or device value given herein may be extended or altered without losing the effect sought. Also, any embodiment may be combined with another embodiment unless explicitly disallowed.

Although the subject matter has been described in language specific to structural features and/or acts, it is to be understood that the subject matter defined in the appended claims is not necessarily limited to the specific features or acts described above. Rather, the specific features and acts described above are disclosed as examples of implementing the claims and other equivalent features and acts are intended to be within the scope of the claims.

It will be understood that the benefits and advantages described above may relate to one embodiment or may relate to several embodiments. The embodiments are not limited to those that solve any or all of the stated problems or those that have any or all of the stated benefits and advantages. It will further be understood that reference to 'an' item may refer to one or more of those items.

The steps or operations of the methods described herein may be carried out in any suitable order, or simultaneously where appropriate.

Additionally, individual blocks may be deleted from any of the methods without departing from the scope of the subject matter described herein. Aspects of any of the example embodiments described above may be combined with aspects of any of the other example embodiments described to form further example embodiments without losing the effect sought.

The term 'comprising' is used herein to mean including the method, blocks, or elements identified, but that such blocks or elements do not comprise an exclusive list and a method or apparatus may contain additional blocks or elements.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements. Expression "or" may be understood as a non-exclusive "or" and therefore a list or two or more elements indicated to be mutually optional by the expression "or" means at least any one of the elements, or at least any two or more of the elements, or at least all the elements.

Although subjects may be referred to as 'first' or 'second' subjects, this does not necessarily indicate any order or importance of the subjects. Instead, such attributes may be used solely for the purpose of making a difference between subjects.

As used in this application, the term 'circuitry' may refer to one or more or all of the following: (a) hardware-only circuit implementations (such as implementations in only analog and/or digital circuitry) and (b) combinations of hardware circuits and software, such as (as applicable):(i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions) and (c) hardware circuit(s) and or processor(s), such as a microprocessor(s) or a portion of a microprocessor(s), that requires software (e.g., firmware) for operation, but the software may not be present when it is not needed for operation. This definition of circuitry applies to all uses of this term in this application, including in any claims.

As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

It will be understood that the above description is given by way of example only and that various modifications may be made by those skilled in the art. The above specification, examples and data provide a complete description of the structure and use of exemplary embodiments. Although various embodiments have been described above with a certain degree of particularity, or with reference to one or more individual embodiments, those skilled in the art could make numerous alterations to the disclosed embodiments without departing from scope of this specification.

**Claims**

1. A Network element comprising:

   at least one radio frequency chain, wherein the at least one radio frequency chain is coupled to a plurality of antennas, wherein the at least one radio frequency chain further comprises a plurality of phase shifters that are configured to:

   receive radio frequency signal;
   shift the phase of the received radio frequency signal; and
   transmit the phase-shifted radio frequency signal to an antenna;

   at least one processor; and
   at least one memory storing instructions that, when executed by the at least one processor, cause the network element at least to:

   obtain client device covariance matrices;
   determine a set of weights;
   calculate a weighted sum of covariance matrices using the obtained client device covariance matrices and determined set of weights;

adjust the phase shifters based on the calculated weighted sum of covariance matrices; and

wherein the weights are determined based on key performance indicators of the network..

2. A network element according to claim 1, wherein the network element further comprises: a digital front end, which is connected to the at least one radio frequency chain using a digital-to-analog converter of the radio frequency chain.

3. A network element according to claim 1 or 2, wherein at least one radio frequency chain further comprises: a splitter configured to split the received radio frequency signal into a plurality of split radio frequency signals, wherein the splitter is configured to feed each of the split radio frequency signals to a dedicated phase shifter and an antenna coupled with the dedicated phase shifter.

4. A network element according to any of preceding claims 1 - 3, wherein the weights are determined as a function of client device priority weights.

5. A network element according to any of preceding claims 1 - 4, wherein the weights are determined based on a predetermined level of user fairness.

6. A network element according to any of preceding claims 1 - 5, wherein the at least one memory and the at least one processor further cause the network element at least to:

design an analog beamformer by using a matching algorithm to match the design to the calculated weighted sum of covariance matrices.

7. A network element according to claim 6, wherein the at least one memory and the at least one processor further cause the network element at least to:

select the analog beamformer based on the designed analog beamformer.

8. A network element according to claim 7, wherein the at least one memory and the at least one processor further cause the network element at least to: change the phase shifter values according to the selected analog beamformer.

9. A method in a communication network, wherein a radio frequency chain further comprises a plurality of phase shifters, wherein the method comprises:

obtaining client device covariance matrices;

determining a set of weights;

calculating a weighted sum of covariance matrices using the obtained client device covariance matrices and determined set of weights;

adjusting the phase shifters based on the calculated weighted sum of covariance matrices; and

wherein determining weights based on a predetermined level of user fairness.

10. A method according to claim 9, wherein the method further comprises:

converting a digital signal into a radio frequency signal.

11. A method according to claim 9 or 10, wherein the method further comprises:

splitting a received radio frequency signal into a plurality of split radio frequency signals; and

feeding each of the split radio frequency signals to a dedicated phase shifter and an antenna coupled with the dedicated phase shifter.

12. A method according to any of preceding claims 9 - 11, wherein determining weights based on a predetermined level of user fairness.

13. A method according to any of preceding claims 9 - 12, wherein the determining weights based on key performance indicators of the network.

14. A method according to any of preceding claims 9 - 13, wherein the method further comprises:

designing an analog beamformer by using a matching algorithm to match the design to the calculated weighted sum of covariance matrices.

15. A method according to claim 14, wherein the method further comprises: selecting the analog beamformer based on the designed analog beamformer; and changing the phase shifter values according to the selected analog beamformer.

Figure 1

Figure 2

302 304 306 308 310 312

Splitter

Phase shifter

Phase shifter

Phase shifter

Filter

Filter

Filter

300

# Figure 3

Figure 4

**Figure 5**

```
┌─────────────────────┐
│   Obtaining user    │ ⟋─ 500
│ device covariance   │
│      matrices       │
└─────────────────────┘
          │
          ▼
┌─────────────────────┐
│ Determining a set of│ ⟋─ 502
│      weights        │
└─────────────────────┘
          │
          ▼
┌─────────────────────┐
│   Calculating a     │
│   weighted sum of   │ ⟍─ 504
│ covariance matrices │
└─────────────────────┘
          │
          ▼
┌─────────────────────┐
│   Adjusting phase   │ ⟋─ 506
│      shifters       │
└─────────────────────┘
          │
          ▼
┌─────────────────────┐
│ Receiving a digital signal│ ⟋─ 508
│ from the ditigal front end │
└─────────────────────┘
          │
          ▼
┌─────────────────────────┐
│ Converting the received signal│ ⟋─ 510
│ into a radio frequency signal │
└─────────────────────────┘
          │
          ▼
┌─────────────────────┐
│  Splitting the radio │ ⟋─ 512
│  frequency signal    │
└─────────────────────┘
          │
          ▼
┌─────────────────────┐
│  Adjusting phases of │ ⟋─ 514
│   the split signals  │
└─────────────────────┘
          │
          ▼
┌─────────────────────┐
│ Transmitting the split│ ⟋─ 516
│      signals         │
└─────────────────────┘
```

Europäisches
Patentamt
European
Patent Office
Office européen
des brevets

**EUROPEAN SEARCH REPORT**

Application Number

EP 25 19 4621

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Park Jihong ET AL: "Hybrid Precoding for Massive MIMO Systems in Cloud RAN Architecture with Capacity-Limited Fronthauls", arXiv.org, 22 September 2017 (2017-09-22), XP093308576, Retrieved from the Internet: URL:https://arxiv.org/pdf/1709.07963 | 1-3,6-8 | INV. H04B7/06 H04B7/08 ADD. H04B7/0452 |
| Y | * figure 1 * * page 3, left-hand column, line 13 - line 24 * * page 3, left-hand column, line 49 - line 50 * * page 5, left-hand column, line 37 - line 38 * * page 7, right-hand column, last line - page 8, left-hand column, line 2 * * page 8, left-hand column, line 14 - line 18 * * page 9, right-hand column, line 1 - line 15 * ----- | 4,5,9-15 | |
| Y | US 2018/212652 A1 (THOMAS TIMOTHY [US] ET AL) 26 July 2018 (2018-07-26) * paragraph [0040] * ----- | 4,5,9-15 | |

TECHNICAL FIELDS SEARCHED (IPC)

H04B

The present search report has been drawn up for all claims

| Place of search | Date of completion of the search | Examiner |
|---|---|---|
| The Hague | 7 January 2026 | Schmidbauer, Philipp |

## ANNEX TO THE EUROPEAN SEARCH REPORT
## ON EUROPEAN PATENT APPLICATION NO.

EP 25 19 4621

07-01-2026

| Patent document cited in search report | Publication date | Patent family member(s) | | Publication date |
|---|---|---|---|---|
| US 2018212652 A1 | 26-07-2018 | CN | 110226294 A | 10-09-2019 |
| | | EP | 3574588 A1 | 04-12-2019 |
| | | US | 2018212652 A1 | 26-07-2018 |
| | | WO | 2018138009 A1 | 02-08-2018 |

EPO FORM P0459